# EUROPEAN PATENT SPECIFICATION

(11) **EP 2 479 008 B1**
(45) Date of publication and mention of the grant of the patent: **12.12.2012**
(21) Application number: 11185296.8
(22) Date of filing: 14.10.2011
(51) Int. Cl.: B25J 15/02, B65B 21/18, B67C 7/00

(54) **A gripping device of a container**
Greifvorrichtung für einen Container
Dispositif de préhension pour un conteneur

(30) Priority: 20.01.2011 IT PR20110006
(43) Date of publication of application: 25.07.2012
(73) Proprietor: G.F. S.p.A., 43040 Solignano (Parma) (IT)
(72) Inventor: Serventi, Franco, 43040 VARANO DE' MELEGARI (PR) (IT); Sorrentino, Catello, 43052 COLORNO (PR) (IT)
(74) Representative: Monelli, Alberto

(56) References cited:
- WO-A1-2010/081512
- WO-A2-03/011718
- DE-A1- 19 816 239
- DE-A1-102006 012 020
- US-A1- 2009 095 370

## Description

This invention relates to a gripping device of a container, typically test tubes, bottles, etc. This invention also relates to an inspection apparatus comprising a gripping device of a container.

A prior art gripping device is known comprising a gripper that holds transparent containers such as test tubes or bottles. This gripper may be rotated about an axis to enable checking of the degree of purity of the liquid contained in the container or the degree of filling of the container.

The gripper comprises two opposite arms which grip and hold the container between them.

This gripping device is not without drawbacks, such as, for example, the possibility that during rotation of the gripper the container constrained by it may vibrate or move. That is particularly evident if the gripping surface of the gripper is not perfectly shaped to match the surface of the container.

A known gripping device for a container is disclosed in W02010/081512.

The aim of this invention is to provide a gripping device and a handling method which overcome the aforesaid drawbacks. More specifically, the aim of this invention is to provide a gripping device and a handling method which make the moving of the container more stable and rigid.

The technical purpose indicated and the aims specified are substantially achieved by a gripping device and a handling method comprising the technical features described in one or more of the appended claims.

Further features and advantages of the invention are more apparent in the non-limiting description which follows of a preferred embodiment of a gripping device as illustrated in the accompanying drawings, in which:

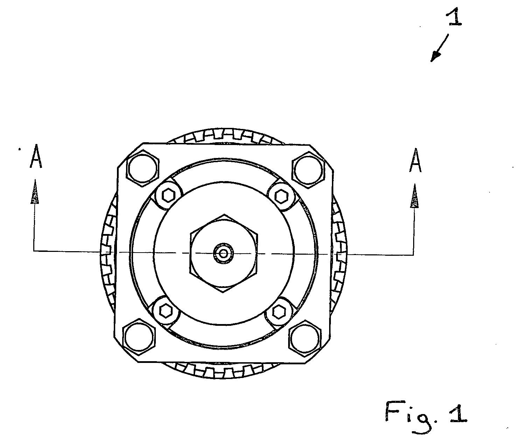

- Figure 1 shows a top view of a gripping device according to this invention;
- Figure 2 shows a cross-section according to the line A-A of Figure 1 of a device in a container gripping configuration;
- Figure 3 shows a cross-section according to the line A-A of Figure 1 of a gripping device in a rest configuration;

With reference to the accompanying drawings, the numeral 1 denotes a gripping device of a container according to this invention. This container may, for example, be a bottle, a test tube, a syringe, a jar, typically containing a liquid. Conveniently, but not necessarily, the container may be contained inside an imaginary parallelepiped having a height less than 15 centimetres and a square base with 8 centimetre sides.

The gripping device 1 comprises means 2 of clamping the container. The clamping means 2 are mobile between a rest configuration and a container gripping configuration. The clamping means 2 comprise:
- a first arm 21 comprising a first gripping zone 210 of the container;
- a second arm 22 comprising a second gripping zone 220 of the container;

In the gripping configuration the first and the second gripping zones 210, 220 are reciprocally neared with respect to the rest configuration in order to retain the container therebetween.

The first and the second arm 21, 22 together form a gripper. Conveniently, both the first and the second arm 21, 22 move to pass from the gripping configuration to the rest configuration; in an alternative non-preferred embodiment the second arm 22 could be fixed and the reciprocal towards/away movement could be determined by the first arm 21. Conveniently, the gripping device 1 also comprises means 3 of shaking the container which move at least the first and the second arm 21, 22 in the gripping configuration. The shaking means 3 allow the liquid contained in the container to be moved for allowing the detection of impurities (typically using visual detection devices comprising a video camera).

As described in more detail below the shaking means 3 rapidly rotate the container gripped by the clamping means 2.

The clamping means 2 also comprise a pressor 23: The pressor 23 in turn comprises a thrust surface 230 of the container. In the gripping configuration the thrust surface 230 is intended to come into contact with the container. Conveniently, the pressor 23 comprises means (such as a rubber membrane) which mitigate any impacts with the container. In the gripping configuration the pressor 23 is close to the first and second gripping zone 210, 220 with respect to the rest configuration. In the preferred embodiment, in the gripping configuration the pressor 23 is low with respect to the rest configuration to come into contact with the container. The thrust surface 230 is intended to come into contact with an upper portion of the container. Conveniently, the first and the second arm 210, 220 are also intended to come into contact with an upper portion of the container. Advantageously, the first and the second arm 210, 220 in the gripping configuration form means from which the container is suspended. This avoids the use of bearing plates which have an inevitable manufacturing cost and have a support structure which could obstruct any inspection of the contents of the container. Conveniently, the first and the second arm 210, 220 and the pressor 23 in the gripping configuration are at the same end of the container.

The gripping device 1 also comprises means 4 for movement, at least partly contemporary, of the pressor 23 and of the first and/or the second arm 21, 22 between said gripping configuration and said rest configuration. In the preferred embodiment the movement means 4 determine a contemporary movement of the pressor 23 and the first and/or the second arm 21, 22; this implies that during the passage from the gripping configuration to the rest configuration and vice versa a movement of the pressor 23 corresponds (necessarily) with a movement of the first and/or the second arm 21, 22 and vice versa. In the rest configuration and in the gripping configuration the pressor 23 adopts two distinct positions in space. Conveniently, the two distinct positions are translated relative to one another.

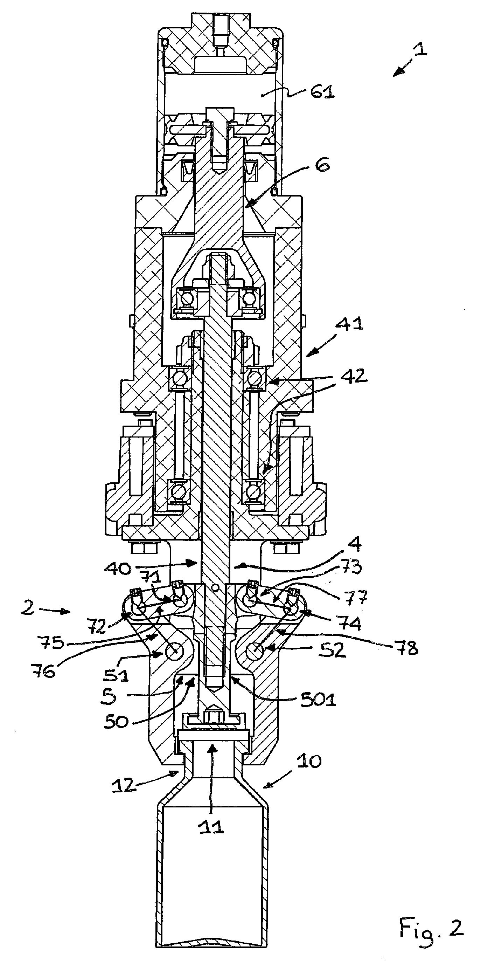

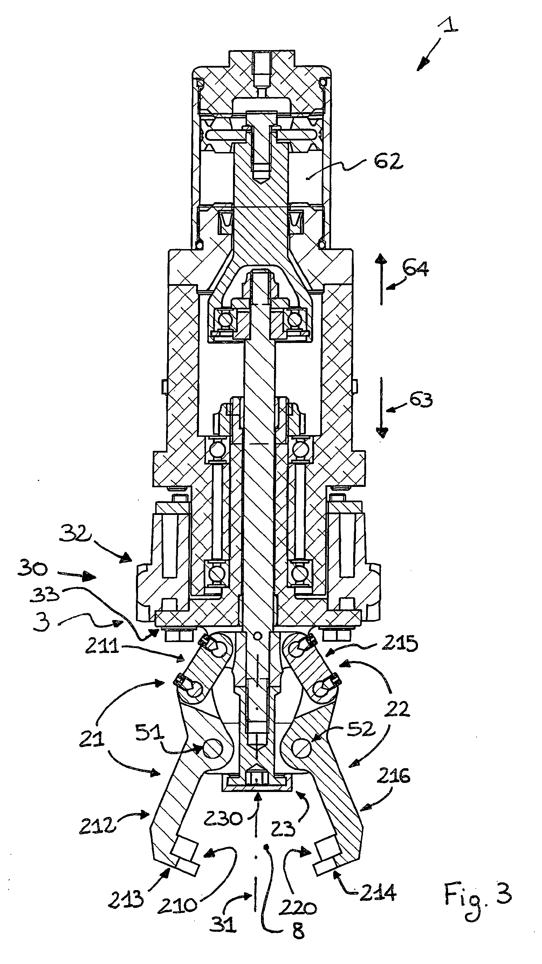

As illustrated by way of an example in Figure 2, the thrust surface 230 is interposed, at least in the gripping configuration (but conveniently also in the rest configuration), between the first and the second arm 21, 22. As illustrated in Figure 3, the thrust surface 230 is also interposed between the first and the second arm 21, 22 in the rest configuration of the clamping means 2.

The movement means 4 comprise a rod 40. Conveniently, the pressor 23 is constrained to an end of the rod 40. Conveniently, the first and second arm 21, 22 are hinged to the rod 40. In the embodiment illustrated by way of an example in the accompanying drawings, the pressor 23 is screwed to the rod 40. The movement means 4 also comprise a fluid-dynamic activation system. The fluid-dynamic activation system comprises a mobile piston 6. The piston 6 is connected to the rod 40. Typically, the piston 6 is integral with the rod 40. The piston 6 fluid dynamically separates a first and a second chamber 61, 62. During the passage of the clamping means 2 from the rest configuration to the gripping configuration, the pressure in the first chamber 61 is greater than the pressure in the second chamber 62 thereby causing a movement of the piston 6 along a first path and a first direction 63. Vice versa, during the passage from the gripping configuration to the rest configuration, the pressure in the second chamber 62 is greater than the pressure in the first chamber 61 thereby causing a movement of the piston 6 (and of the rod 40) along the first path, but along a second direction 64 opposite the first direction 63. To allow the movement of the piston 6 along the first direction 63 an operating fluid is introduced in the first chamber 61, whilst to allow the movement of the piston 6 along the second direction 64 the operating fluid is introduced in the second chamber 62. Conveniently, the rod 40 extends along the first direction.

The first arm 21 comprises a first and a second body 211, 212 that are reciprocally hinged. The first body 211 is hinged to the rod 40. The second body 212 comprises the first gripping zone 210. The first gripping zone 210 is at a first end of the second body 212 opposite a second end at which the second body 212 is hinged to the first body 211.

The rod 40 is at least partially internal of a jacket 41. The second body 212 is rotatably constrained by means of a first hinge 51 to a support 5 which is solidly constrained to at least a portion of the jacket 41 (conveniently, the support 5 remains fixed in space during the passage between the gripping configuration and the rest configuration of the clamping means 2). The first chamber 51 is interposed between the first and the second end of the second body 212. The movement means 4 determine a movement (typically a translation) of the rod 40 along a straight line and this corresponds with a rotation of the second body 212 about the first chamber 51. The first body 211 is rotatably constrained to the rod 40 at a first point 71. The first and the second body 211, 212 are rotatably constrained to each other at a second point 72. Passing from the rest configuration to the gripping configuration the first point 71 moves towards the first hinge 51. More specifically, the first and the second body 211, 212 form an articulated joint. A first segment is formed passing through the first and the second point 71, 72 and a second segment 76 passing through the second point 72 and the first hinge 51.

Passing from the rest configuration to the gripping configuration the smaller of the two angles formed by the intersection of the first and the second segment 75, 76 reduces in size. Conveniently, the smaller of the two angles formed by the intersection of the first and the second segment 75, 76 is the one facing the rod 40.

What has been indicated above with reference to the first and the second body 211, 212 of the first arm 21 may be repeated for a third and a fourth body 215, 216 forming part of the second arm 22.

The third and the fourth body 215, 216 are reciprocally hinged. The third body 215 is also hinged also to the rod 40. The fourth body 216 comprises the second gripping zone 220. The fourth body 216 is rotatably constrained by means of a second hinge 52 to the support 5. A movement of the rod 40 along a straight line formed by the movement means 4 corresponds with a rotation of the fourth body 216 about the second chamber 52. The third body 215 is rotatably constrained to the rod 40 at a third point 73. The third and the fourth body 215, 216 are rotatably constrained at a fourth point 74. Passing from the rest configuration to the gripping configuration the third point 73 moves towards the second hinge 52. More specifically, the third and the fourth body 215, 216 form an articulated joint. A third segment 77 is formed passing through the third and the fourth point 73, 74 and a fourth segment 78 passing through the fourth point 74 and the second hinge 52. Passing from the rest configuration to the gripping configuration the smaller of the two angles formed by the intersection of the third and the fourth segment 77, 78 reduces in size. The smaller of the two angles formed by the intersection of the third and the fourth segment 77, 78 is the one facing the rod 40.

Conveniently, the first and the second arm 21, 22 are symmetrical to each other (advantageously relative to at least a first plane passing through the axis of rotation 31).

Conveniently, the support 5 comprises guide means 50 of the rod 40. More specifically, the guide means 50 comprise a hole 501 formed in the support 5. Conveniently, (see Figure 3) an end of the pressor 23 located at the thrust surface 230 is stopped by the support 5 in the rest configuration of the clamping means 2 (whilst in the gripping configuration the pressor 23 is moved away from the support 5).

The first arm 21 (more specifically the second body 212), the second arm 22 (more specifically the fourth body 216) and the pressor 23 together form a zone 8 for housing at least a part of the container.

As already indicated, the means 3 of shaking the container comprise means 30 of rotating at least the first and the second arm 21, 22 about an axis of rotation 31. Advantageously, the shaking means 3 comprise means 30 of rotating the first and the second arm 21, 22 and the pressor 23. The axis of rotation 31 is substantially at right angles to the thrust surface 230. The first arm 21, the second arm 22, the pressor 23 rotating in the gripping configuration determine the rotation of the container interposed between them and the shaking of the liquid contained in the container. The rotation means 30 comprise a power take-off (for example, a gear wheel 32) rotatably integral with the rod 40 (for example, by interposing a sleeve 33 also forming part of the rotation means 30; conveniently, the sleeve 33 is passed through by the rod 40). The power take-off is kinematically coupled to an external drive source. The rod 40 may therefore rotate about an axis of rotation 31. Roller bearings 42 which facilitate rotation of the rod 40 are operatively interposed between the rod 40 and the jacket 41. The jacket 41 forms the first and the second chamber 61, 62 described above. The jacket 41 also forms the two limit positions of the piston 6.

The first and the second gripping zone 210, 220 respectively comprise a first and a second protuberance 213, 214 which project transversally to a direction of thrust exerted by the pressor 23 on the container in the gripping configuration. The first and the second protuberance 213, 214 form contact elements which in the gripping configuration of the clamping means 2 oppose the thrust action exerted by the pressor 23. The first and the second protuberance 213, 214 in the gripping configuration together form a ring which delimits an internal hole designed to house the neck of the container. The ring extends at right angles to a direction of thrust of the pressor 23. This invention also relates to an inspection device (typically an inspection apparatus) comprising a gripping device of a container having one or more of the features described above.

More specifically, the inspection device (inspection apparatus) comprises a plurality of the gripping devices of a container. Advantageously, these are positioned along a rotary carousel.

This invention also relates to a method of handling a container 10. Conveniently, the method may be implemented by a gripping device 1 having one or more of the technical features described above. The method comprises the steps of:
- clamping the container 10 by reciprocally nearing a first gripping zone 210 which is a part of a first arm 21 and a second gripping zone 220 which is a part of a second arm 22 up to when the first and the second gripping zone 210, 220 are in contact with the container 10 interposed therebetween, defining a gripping configuration of the container 10;
- shaking the container 10 by moving at least the first arm 21 and the second arm 22 located in the gripping configuration of the container 10.

The step of shaking the container 10 follows the step of clamping the container 10.

Conveniently, the step of shaking the container comprises the step of rotating the container about an axis of rotation 31, rotating the first and the second arm 21, 22 about the axis 31.

The step of clamping the container 10 comprises a step of placing the container 10 in contact with a pressor 23 exerting a pressure against the container 10. The gripping configuration thus entails that the pressor 23 is in contact with the container 10. More specifically, the pressor 23 at least in the gripping configuration is interposed between the first and the second arm 21, 22. Conveniently, the step of moving the first and the second arm 210, 220 is at least partly simultaneous with the step of moving the pressor 23.

Conveniently, the step of placing a pressor 23 in contact with the container 10 provides that the pressor 23 presses the container 10 against at least a part of the first and the second gripping zone 210, 220 (for trapping at least a portion of the container between the pressor 23 and the first and the second gripping zone 210, 220). In this way, the container 10 remains more firmly connected to the clamping means 2. The step of placing a pressor 23 in contact with the container 10 provides that the pressor 23 exerts a pressure against the upper portion of the container 10. The first and the second arm 210, 220 in the gripping configuration grip the container close to the upper portion of the container. Conveniently, the pressor 23, the first and the second arm 210, 220 perform their action close to (at) a same end of the container.

Conveniently, the step of clamping the container 10 comprises the following sub-steps:
- positioning the first and the second gripping zone 210, 220 in contact with a neck 12 of the container 10;
- exerting a force by means of the pressor 23 on a plug 11 of the container 10 located on the neck 12, the force pushing the plug towards the neck 12. Conveniently, during the step of shaking the container the method comprises observing the contents of the container for detecting any impurities. After the step of shaking the container, the method comprises releasing the container reciprocally moving away the first and the second gripping zone 210, 220.

The present invention has major advantages.

More specifically, it allows the container to be moved in a stable fashion reducing the vibrations. It also prevents elements of the gripping device from obstructing any visual inspection of the container (typically transparent).

It shall be understood that the invention described above may be modified and adapted in several ways without departing from the scope of the inventive concept. Moreover, all the details of the invention may be substituted by other technically equivalent elements. In practice, all the materials used, as well as the dimensions, may vary according to requirements.

## Claims

1. A gripping device of a container, of a type comprising:
i) clamping means (2) of the container, which clamping means (2) are mobile between a rest configuration and a container gripping configuration and comprising:
- a first arm (21) comprising a first gripping zone (210) of the container;
- a second arm (22) comprising a second gripping zone (220) of the container;
in the gripping configuration the first and the second gripping zones (210, 220) being reciprocally neared with respect to the rest configuration in order to retain the container therebetween;
ii) shaking means (3) of the container which move at least the first and the second arm (21, 22) in the gripping configuration;
**characterised in that** the clamping means (2) comprise a pressor (23) in turn comprising a thrust surface (230) of the container, said thrust surface (230) in the gripping configuration being intended to come into contact with the container.

2. The device according to claim 1, **characterised in that** the thrust surface (230) is intended to come into contact with an upper portion of the container.

3. The device according to claim 1 or 2, **characterised in that** said thrust surface (230), at least in the gripping configuration, is interposed between the first and the second arm (21, 22).

4. The device according to any one of the preceding claims, **characterised in that** it comprises means (4) for contemporary movement of the pressor (23) and of the first and/or the second arm (21, 22) between said gripping configuration and said rest configuration; the pressor (23) taking on two distinct positions in space in the rest configuration and in the gripping configuration.

5. The device according to claim 4, **characterised in that** said movement means (4) comprise a rod (40), said pressor (23) being constrained to an end of said rod (40), the first and the second arm (21, 22) being hinged to said rod (40).

6. The device according to claim 5, **characterised in that** said first arm (21) comprises a first and a second body (211, 212) that are reciprocally hinged; said first body (211) being hinged to said rod (40), said second body (212) comprising said first gripping zone (210); said rod (40) being at least partially internal of a jacket (41), said second body (212) being rotatably constrained by means of a first hinge (51) to a support (5) which is solidly constrained to at least a portion of said jacket (41); said movement means (4) determining a movement of the rod (40) along a straight line and a rotation of the second body (212) about said first hinge (51) corresponding thereto.

7. The device according to claim 6, **characterised in that** said support (5) comprises guide means (50) of the rod (40).

8. The device according to any one of the preceding claims, **characterised in that** said shaking means (3) of the container comprise rotation means (30) of at least the first and the second arm (21, 22) about a rotation axis (31); said rotation axis (31) being substantially orthogonal to said thrust surface (230).

9. The device according to any one of the preceding claims, **characterised in that** the first and the second gripping zone (210, 220) respectively comprise a first and a second protuberance (213, 214) which project transversally of a thrust direction exerted by the pressor (23) on the container in the gripping configuration.

10. An inspection apparatus, **characterised in that** it comprises a gripping device (1) of a container according to any one of claims from 1 to 9.

11. A handling method of a container (10) comprising the steps of:
- clamping the container (10) by reciprocally nearing a first gripping zone (210) which is a part of a first arm (21) and a second gripping zone (220) which is a part of a second arm (22) up to when the first and the second gripping zone (210, 220) are in contact with the container (10) interposed therebetween, defining a gripping configuration of the container (10);
- shaking the container (10) by moving at least the first arm (21) and the second arm (22) located in the gripping configuration of the container (10);
**characterised in that** the step of clamping the container (10) to define a gripping configuration comprises a step of placing the container (10) in contact with a pressor (23) exerting a pressure against said container (10).

12. The method according to claim 11, **characterised in that** the step of placing a pressor (23) in contact with the container (10) provides that said pressor (23) exerts a pressure against the upper portion of said container (10), said first and second arm (210, 220), in the gripping configuration, gripping the container in proximity of the upper portion of the container itself.

13. The method according to claim 11 or 12, **characterised in that** the step of placing a pressor (23) in contact with the container (10) provides that said pressor (23) presses the container (10) against at least a part of the first and the second gripping zone (210, 220).

14. The method according to claim 11 or 12 or 13, **characterised in that** said step of clamping the container (10) comprises the following substeps:
- positioning the first and the second gripping zone (210, 220) in contact with a neck (12) of the container (10);
- exerting a force by means of the pressor (23) on a plug (11) of the container (10) located on said neck (12), said force pushing the plug towards the neck (12).

## Patentansprüche

1. Greifvorrichtung für einen Behälter vom Typ, der Folgendes umfasst:
i) Klemmmittel (2) für den Behälter, wobei die Klemmmittel (2) zwischen einer Ruhekonfiguration und einer Behältergreifkonfiguration beweglich sind und Folgendes umfassen:
- einen ersten Arm (21), umfassend einen ersten Behältergreifbereich (210);
- einen zweiten Arm (22), umfassend einen zweiten Behältergreifbereich (220);
wobei der erste und der zweite Greifbereich (210, 220) in der Greifkonfiguration im Vergleich zur Ruhekonfiguration einander angenähert sind, um den Behälter dazwischen festzuhalten;
ii) Mittel (3) zum Schütteln des Behälters, die zumindest den ersten und den zweiten Arm (21, 22) in der Greifkonfiguration bewegen;
**dadurch gekennzeichnet, dass** die Klemmmittel (2) einen Niederhalter (23) umfassen, der wiederum eine Schubfläche (230) für den Behälter umfasst, wobei die Schubfläche (230) in der Greifkonfiguration für die Anlage an den Behälter konzipiert ist.

2. Vorrichtung nach Anspruch 1, **dadurch gekennzeichnet, dass** die Schubfläche (230) für die Anlage an einen oberen Abschnitt des Behälters konzipiert ist.

3. Vorrichtung nach Anspruch 1 oder 2, **dadurch gekennzeichnet, dass** die Schubfläche (230) zumindest in der Greifkonfiguration zwischen dem ersten und dem zweiten Arm (21, 22) liegt.

4. Vorrichtung nach einem der vorangehenden Ansprüche, **dadurch gekennzeichnet, dass** sie Mittel (4) zur gleichzeitigen Bewegung des Niederhalters (23) und des ersten und/oder zweiten Arms (21, 22) zwischen der Greifkonfiguration und der Ruhekonfiguration umfasst; wobei der Niederhalter (23) in der Ruhekonfiguration und in der Greifkonfiguration zwei verschiedene Positionen im Raum einnimmt.

5. Vorrichtung nach Anspruch 4, **dadurch gekennzeichnet, dass** die Bewegungsmittel (4) eine Stange (40) umfassen, wobei der Niederhalter (23) mit einem Ende der Stange (40) verbunden ist, wobei der erste und der zweite Arm (21, 22) schwenkbar an der Stange (40) befestigt sind.

6. Vorrichtung nach Anspruch 5, **dadurch gekennzeichnet, dass** der erste Arm (21) einen ersten und einen zweiten Körper (211, 212) umfasst, die schwenkbar aneinander befestigt sind; wobei der erste Körper (211) schwenkbar an der Stange (40) befestigt ist, wobei der zweite Körper (212) den ersten Greifbereich (210) umfasst; wobei die Stange (40) zumindest teilweise in einer Ummantelung (41) liegt, wobei der zweite Körper (212) mithilfe eines ersten Gelenks (51) drehbar mit einer Halterung (5) verbunden ist, die fest mit zumindest einem Abschnitt der Ummantelung (41) verbunden ist; wobei die Bewegungsmittel (4) eine Bewegung der Stange (40) entlang einer geraden Linie und eine dementsprechende Drehung des zweiten Körpers (212) um das erste Gelenk (51) verursachen.

7. Vorrichtung nach Anspruch 6, **dadurch gekennzeichnet, dass** die Halterung (5) Mittel (50) zum Führen der Stange (40) umfasst.

8. Vorrichtung nach einem der vorangehenden Ansprüche, **dadurch gekennzeichnet, dass** die Mittel (3) zum Schütteln des Behälters Mittel (30) zum Drehen zumindest des ersten und zweiten Arms (21, 22) um eine Drehachse (31) umfassen; wobei die Drehachse (31) im Wesentlichen orthogonal zur Schubfläche (230) ist.

9. Vorrichtung nach einem der vorangehenden Ansprüche, **dadurch gekennzeichnet, dass** der erste und der zweite Greifbereich (210, 220) jeweils einen ersten und einen zweiten Vorsprung (213, 214) umfasst, der transversal zur Richtung eines Schubs hervorragt, der in der Greifkonfiguration vom Niederhalter (23) auf den Behälter ausgeübt wird.

10. Prüfeinrichtung, **dadurch gekennzeichnet, dass** sie eine Greifvorrichtung (1) für einen Behälter nach einem der Ansprüche 1 bis 9 umfasst.

11. Handhabungsverfahren eines Behälters (10), umfassend die folgenden Schritte:
- Einklemmen des Behälters (10) durch gegenseitiges Annähern eines ersten Greifbereiches (210), der ein Teil eines ersten Arms (21) ist, und eines zweiten Greifbereiches (220), der ein Teil eines zweiten Arms (22) ist, bis der erste und der zweite Greifbereich (210, 220) am dazwischen liegenden Behälter (10) anliegen, wodurch eine Greifkonfiguration des Behälters (10) definiert wird;
- Schütteln des Behälters (10) durch Bewegen zumindest des ersten Arms (21) und des zweiten Arms (22), die in der Greifkonfiguration des Behälters (10) liegen;
**dadurch gekennzeichnet, dass** der Schritt des Einklemmens des Behälters (10) zum Definieren einer Greifkonfiguration einen Schritt des Platzierens des Behälters (10) in Anlage an einem Niederhalter (23) umfasst, der einen Druck auf den Behälter (10) ausübt.

12. Verfahren nach Anspruch 11, **dadurch gekennzeichnet, dass** der Schritt des Platzierens eines Niederhalters (23) in Anlage an den Behälter (10) vorsieht, dass der Niederhalter (23) einen Druck auf den oberen Abschnitt des Behälters (10) ausübt, wobei der erste und der zweite Arm (210, 220) in der Greifkonfiguration den Behälter in der Nähe des oberen Abschnitts des Behälters greifen.

13. Verfahren nach Anspruch 11 oder 12, **dadurch gekennzeichnet, dass** der Schritt des Platzierens eines Niederhalters (23) in Anlage an den Behälter (10) vorsieht, dass der Niederhalter (23) den Behälter (10) gegen zumindest einen Teil des ersten und zweiten Greifbereichs (210, 220) drückt.

14. Verfahren nach Anspruch 11 oder 12 oder 13, **dadurch gekennzeichnet, dass** der Schritt des Einklemmens des Behälters (10) die folgenden Unterschritte umfasst:
- Positionierung des ersten und zweiten Greifbereichs (210, 220) in Anlage an einen Hals (12) des Behälters (10);
- Ausübung einer Kraft mithilfe des Niederhalters (23) auf einen Stopfen (11) des Behälters (10), der auf dem Hals (12) liegt, wobei die Kraft den Stopfen in Richtung des Halses (12) schiebt.

## Revendications

1. Dispositif de préhension pour un conteneur, d'un type comprenant :
i) des moyens de serrage (2) du conteneur, lesdits moyens de serrage (2) étant mobiles entre une configuration de repos et une configuration de préhension de conteneur et comprenant :
- un premier bras (21) comprenant une première zone de préhension (210) du conteneur ;
- un second bras (22) comprenant une seconde zone de préhension (220) du conteneur ;
dans la configuration de préhension, les première et seconde zones de préhension (210, 220) étant réciproquement rapprochées par rapport à la configuration de repos afin de retenir entre elles le conteneur ;
ii) des moyens de secouage (3) du conteneur qui déplacent au moins le premier et le second bras (21, 22) dans la configuration de préhension ;
**caractérisé en ce que** les moyens de serrage (2) comprennent un presseur (23) à son tour comportant une surface de poussée (230) du conteneur, ladite surface de poussée (230) dans la configuration de préhension étant destinée à entrer en contact avec le conteneur.

2. Dispositif selon la revendication 1, **caractérisé en ce que** la surface de poussée (230) est destinée à entrer en contact avec une portion supérieure du conteneur.

3. Dispositif selon les revendications 1 ou 2, **caractérisé en ce que** ladite surface de poussée (230), au moins dans la configuration de préhension, est interposée entre le premier et le second bras (21, 22).

4. Dispositif selon l'une quelconque des revendications précédentes, **caractérisé en ce qu'**il comprend des moyens (4) pour déplacer en même temps le presseur (23) et le premier et/ou le second bras (21, 22) entre ladite configuration de préhension et ladite configuration de repos ; le presseur (23) se retrouvant dans deux positions distinctes dans l'espace dans la configuration de repos et dans celle de préhension.

5. Dispositif selon la revendication 4, **caractérisé en ce que** lesdits moyens de déplacement (4) comprennent une tige (40), ledit presseur (23) étant contraint à une extrémité de ladite tige (40), le premier et le second bras (21, 22) étant montés articulés à ladite tige (40).

6. Dispositif selon la revendication 5, **caractérisé en ce que** ledit premier bras (21) comprend un premier et un second corps (211, 212) étant réciproquement montés articulés ; ledit premier corps (211) étant monté articulé à ladite tige (40), ledit second corps (212) comprenant ladite première zone de préhension (210) ; ladite tige (40) étant au moins partiellement à l'intérieur d'une enveloppe (41), ledit second corps (212) étant contraint de façon rotative par le biais d'une première charnière (51) à un support (5) qui est contraint solidement à au moins une portion de ladite enveloppe (41) ; lesdits moyens de déplacement (4) déterminant un déplacement de la tige (40) le long d'une ligne droite et une rotation du second corps (212) autour de ladite première charnière correspondant à celui-ci (51).

7. Dispositif selon la revendication 6, **caractérisé en ce que** ledit support (5) comprend des moyens de guidage (50) de la tige (40).

8. Dispositif selon l'une quelconque des revendications précédentes, **caractérisé en ce que** lesdits moyens de secouage (3) du conteneur comprennent des moyens de rotation (30) d'au moins le premier et le second bras (21, 22) autour d'un axe de rotation (31) ; ledit axe de rotation (31) étant substantiellement orthogonal à ladite surface de poussée (230).

9. Dispositif selon l'une quelconque des revendications précédentes, **caractérisé en ce que** la première et la seconde zone de préhension (210, 220) comprennent respectivement une première et une seconde saillie (213, 214) qui dépassent transversalement d'une direction de poussée exercée par le presseur (23) sur le conteneur dans la configuration de préhension.

10. Dispositif de contrôle, **caractérisé en ce qu'**il comprend un dispositif de préhension (1) pour un conteneur selon l'une quelconque des revendications de 1 à 9.

11. Procédé de manipulation d'un conteneur (10) comprenant les étapes de :
- serrer le conteneur (10) en rapprochant réciproquement une première zone de préhension (210) correspondant à une partie d'un premier bras (21) et une seconde zone de préhension (220) correspondant à une partie d'un second bras (22) jusqu'à ce que les première et seconde zones de préhension (210, 220) soient en contact avec le conteneur (10) interposé entre elles, définissant une configuration de préhension du conteneur (10) ;
- secouer le conteneur (10) en déplaçant au moins le premier bras (21) et le second bras (22) placés dans la configuration de préhension du conteneur (10) ;
**caractérisé en ce que** l'étape de serrage du conteneur (10) pour définir une configuration de préhension comprend une étape de positionnement du conteneur (10) en contact avec le presseur (23) exerçant une pression contre ledit conteneur (10).

12. Procédé selon la revendication 11, **caractérisé en ce que** l'étape de positionnement d'un presseur (23) en contact avec le conteneur (10) prévoit que ledit presseur (23) exerce une pression contre la portion supérieure dudit conteneur (10), lesdits premier et second bras (210, 220), dans la configuration de préhension, prenant le conteneur à proximité de la portion supérieure du conteneur lui-même.

13. The procédé selon les revendications 11 ou 12, **caractérisé en ce que** l'étape de positionnement d'un presseur (23) en contact avec le conteneur (10) prévoit que ledit presseur (23) appuie le conteneur (10) contre au moins une partie de la première et de la seconde zone de préhension (210, 220).

14. Procédé selon les revendications 11 ou 12 ou 13, **caractérisé en ce que** ladite étape de serrage du conteneur (10) comprend les sous-étapes suivantes :
- positionner la première et la seconde zone de préhension (210, 220) en contact avec un col (12) du conteneur (10) ;
- exercer une force par le biais du presseur (23) sur un bouchon (11) du conteneur (10) situé sur ledit col (12), ladite force poussant le bouchon vers le col (12).
